# EUROPEAN PATENT APPLICATION

(11) **EP 4 637 015 A1**
(43) Date of publication of application: **22.10.2025**
(21) Application number: 24170407.1
(22) Date of filing: 16.04.2024
(51) Int. Cl.: H02M 7/219, H02M 1/12, H02M 3/158

(54) **POWER CONVERTER WITH ACTIVE FILTER CIRCUIT**

(71) Applicant: Siemens Aktiengesellschaft, 80333 München (DE)
(72) Inventor: Mondal, Gopal, 91058 Erlangen (DE); Stutz, Christian, 91056 Erlangen (DE)
(74) Representative: Siemens Patent Attorneys

(57) **Abstract**

A power converter with a DC link with at least one DC link capacitor, an active rectifier circuit connected between AC terminals of the converter and the DC link, an active filter circuit connected between AC terminals of the converter and the DC link,
wherein the active filter circuit comprises an auxiliary active rectifier circuit with auxiliary AC terminals and auxiliary DC terminals and an active filter inductor in each line between the converter AC terminals and the auxiliary AC terminals, the active filter circuit comprises a DC/DC-converter having first and second auxiliary DC terminals, the first auxiliary DC terminals being connected to the auxiliary DC terminals, wherein the DC/DC converter is configured to operate as an active common mode noise filter and the active filter circuit comprises a capacitive connection to a ground or neutral potential of the converter.

## Description

The present invention relates to a power converter, particularly a power converter for an electric drive, for example a power converter converting between a three-phase supply grid voltage and a three-phase voltage driving an electric motor. The power converter has an active filter circuit.

Power converters need to fulfil EMC (electromagnetic compatibility) standards to be allowed to connect to the AC supply grid. Usually, passive filters are used to fulfil such standards. Passive filters are not very effective for changing grid conditions as they cannot be adjusted if additional noise appears in the grid which was not considered during design. Additionally, passive filters are typically designed for a worst-case scenario resulting in large components even though the converter will rarely ever encounter that worst-case scenario.

Active filters can solve some of the problems of passive filters. They can adapt when grid conditions change, e.g. when additional noise appears from outside environments, allowing a remaining passive filter of the power converter to use much smaller components.

It is an object of the present invention to provide an improved power converter having an improved active filter circuit. A power converter according to claim 1 provides a solution for this object.

The power converter according to the invention comprises a DC link with at least one DC link capacitor and an active rectifier circuit connected between AC terminals of the converter and the DC link. It furthermore comprises an active filter circuit connected between AC terminals of the converter and the DC link.

The active filter circuit comprises an auxiliary active rectifier circuit with auxiliary AC terminals and auxiliary DC terminals and an active filter inductor in each line between the converter AC terminals and the auxiliary AC terminals.

The active filter circuit also comprises a DC/DC-converter having first and second auxiliary DC terminals, the first auxiliary DC terminals being connected to the auxiliary DC terminals of the auxiliary active rectifier circuit. The DC/DC converter is configured to operate as an active common mode noise filter.

The active filter circuit comprises a capacitive connection to a ground or neutral potential of the converter.

It is to be understood that the capacitive connection is based on specific circuit elements, i.e. capacitor elements. The capacitive connection is not meant to be consisting of stray capacitances. In other words, the capacitive connection comprises discrete capacitor elements, e.g. SMD elements.

Preferentially, the auxiliary active rectifier circuit is configured to operate as an active DM noise filter circuit while the DC/DC converter is configured to operate as a common mode noise filter.

Advantageously the proposed power converter's active filter circuit is configured to not only reduce differential mode noise but also common mode noise thus reducing the size of a passive noise filter of the power converter.

Further features that may be added alone or together in exemplary embodiments of the invention include:
The power converter may comprise a passive filter circuit arranged in the AC lines connecting it to the grid. The passive filter circuit may comprise LCL-type filter parts designed to filter both differential and common mode noise.

The auxiliary rectifier circuit is preferentially a 3-phase AC to DC converter. It can be a two-level converter comprising three parallel half-bridges of two semiconductor switches each. Depending on the grid voltage, it may be advantageous to use a different setup, particularly a multilevel converter.

The DC/DC converter may comprise a parallel circuit comprising two half-bridges, each having two controllable semiconductor switches that are arranged in a series connection. DC/DC conversion between the terminals of the DC/DC converter is then effected by switching the semiconductor switches using a pulse width modulation scheme. Advantageously, this DC/DC converter has a simple and compact setup. This setup is particularly suited for reducing common mode noise as it allows two different semiconductor switch states to be used that have a different common mode voltage.

The DC/DC converter may be connected in one of two ways with the other parts of the circuit. In a first alternative, the first auxiliary DC terminals are each connected across an inductance to one of the midpoints of the half-bridges. The outer terminals of the half-bridges form the second auxiliary DC terminals. This means that in this configuration, the DC/DC converter is connected to the auxiliary rectifier through the midpoints of the half-bridges.

In a second alternative, the second auxiliary DC terminals are each connected across an inductance to one of the midpoints of the half-bridges. The outer terminals of the half-bridges form the first auxiliary DC terminals. This means that in this configuration the DC/DC converter is connected to the auxiliary rectifier through the outer terminals of the half-bridges.

In a further embodiment of the power converter according to the second alternative, the second auxiliary DC terminals may be interconnected with a capacitor. In other words, the midpoints of the half-bridges of the DC/DC converter are interconnected across an LCL series connection of an inductor, a capacitor and an inductor.

Depending on the configuration of the DC/DC converter, further configuration options may be used.

In one embodiment of the invention, the second auxiliary DC terminals are connected to the DC link. This is preferentially a direct connection, i.e. with no other circuit elements interposed. As described above, if the second auxiliary DC terminals are connected to the midpoints of the half-bridges, inductive elements are arranged between the midpoints and the second auxiliary DC terminals, i.e. the inductive elements are present between the midpoints of the half-bridges and the DC link.

In another embodiment of the power converter, the capacitive connection comprises, for each of the second auxiliary DC terminals of the DC/DC converter, a capacitor arranged between the respective terminal and ground or a neutral potential. In other words, in this embodiment, the capacitive connection is arranged at the second auxiliary DC terminals.

When arranged at a DC node of the active filter circuit, the capacitive connection comprises one capacitor between each of the two DC lines and ground or the neutral potential.

In another embodiment of the power converter, the capacitive connection comprises, for each of the first auxiliary DC terminals of the DC/DC converter, a capacitor arranged between the respective terminal and ground or a neutral potential. In other words, in this embodiment, the capacitive connection is arranged at the first auxiliary DC terminals. Since the first auxiliary DC terminals are connected, particularly directly connected, to the auxiliary DC terminals of the auxiliary rectifier, the capacitive connection is also arranged in direct connection to the auxiliary rectifier on its DC side.

Alternatively, the capacitive connection may comprise, for each of the AC lines, a capacitor arranged between the respective line and ground or the neutral potential, connected to the line at a node between the auxiliary AC terminals and the active filter inductor, with a further inductor between the node and the auxiliary AC terminals. This means that in this embodiment, the capacitive connection is placed in an AC part of the active filter circuit and thus comprises three capacitors. In each line, the active filter inductor, the respective capacitor and the further inductor form an LCL configuration.

In other words, the capacitive connection which is required to operate the DC/DC converter to counteract common mode noise generated in the active rectifier circuit and/or an inverted connected to the DC link may be connected to any point in the active filter circuit between the active filter inductors and the DC link of the power converter. This point may be in an AC section of the active filter circuit, "behind" the auxiliary rectifier from the viewpoint of the DC/DC converter, or in a DC section of the active filter circuit.

In another embodiment of the power converter, a capacitor is connected between the auxiliary DC terminals, thus forming an auxiliary DC link.

The semiconductor switches of the active rectifier circuit are preferentially selected to have a current rating that at least matches the nominal maximum current of the converter, as the active rectifier circuit is used to handle the full power of the power converter. Conversely, the semiconductor switches of the active filter circuit may be selected to have a current rating lower than the semiconductor switches of the active rectifier circuit as these switches only need to handle the approximate power of the noise generated in the active rectifier circuit which is much lower than the nominal power of the converter. Advantageously, this reduces the electrical losses generated by these switches.

In typical applications, the power converter may comprise an inverter circuit connected between the DC link and load terminals. For example, the power converter may form an industrial drive circuit configured to supply an electrical motor with a three-phase AC voltage of variable frequency.

The active rectifier circuit may be configured to perform switching operations with its semiconductor switches at a switching frequency of between 1 and 10 kHz, particularly between 2 and 4 kHz. In comparison to comparable power converters using only passive filters this is a low switching frequency. In such power converters a switching frequency in that range would typically be avoided to reduce the size of the passive filter components. Since the present power converter uses its active filter circuit to reduce at least part of the differential as well as common mode noise this low switching frequency can be used while keeping the passive filter components sufficiently small. Switching at such a low frequency reduces switching losses compared to a power converter operating its active rectifier switches at a higher frequency such as 16 kHz.

The semiconductor switches of the active filter circuit in turn are configured to operate at a switching frequency of more than the active rectifier circuit, particularly above 10 kHz, particularly above 50 kHz. The incurred switching losses are comparatively low as the switches of the active filter are operated to only counteract the noise generated in the active rectifier circuit and possibly also an inverter connected to the DC link. The described configuration of the switches and their control circuit leads to an overall very efficient operation of the converter.

The power semiconductor switches used are known in the technical field and may particularly be IGBTs (insulated gate bipolar transistors) or MOSFETs (metal-oxide semiconductor field-effect transistors). They may be silicon devices or wide bandgap devices such as SiC or GaN devices.

Particularly the active rectifier circuit may use silicon devices while the active filter circuit may use wide bandgap devices which allow improved operation at higher switching frequencies.

Control of the semiconductor switches of the active filter circuit may be based on measurements of the noise present at the AC terminals of the active rectifier circuit. Advantageously this allows the active filter circuit to react to changing noise environments that are generated outside the power converter and thus cannot be foreseen.

Alternatively, control may be based on calculated noise based on the switching scheme of the active rectifier circuit. Advantageously this does not require high-speed measurements and filtering to create a suitable noise input signal.

Additionally, the compensation of DM noise and CM noise may use different ways to determine noise. Particularly, DM noise may be measured while CM noise may be calculated.

The switches may be operated to create a signal that is the inverse of the present noise as deduced by measurement or calculation from the PWM scheme. While the switches may be operated at different switching frequencies compared to the active rectifier circuit, operation of part or all switches of the power converter may still be synchronized.

Embodiments of the present invention are now described with reference to the accompanying drawings to which the invention is not limited. The illustrations of the drawings are in schematic form. It is noted that in different figures, similar or identical elements use the same reference signs.
Figure 1 illustrates a first embodiment of a power converter with a combined active DM and CM noise filter circuit,
Figure 2 illustrates a second embodiment of a power converter with a combined active DM and CM noise filter circuit,
Figure 3 illustrates a third embodiment of a power converter with a combined active DM and CM noise filter circuit,
Figure 4 illustrates a fourth embodiment of a power converter with a combined active DM and CM noise filter circuit,
Figure 5 illustrates a fifth embodiment of a power converter with a combined active DM and CM noise filter circuit,
Figure 6 illustrates a sixth embodiment of a power converter with a combined active DM and CM noise filter circuit,
Figure 7 shows simulated results for the differential mode noise and noise reduction for the first embodiment of the power converter,
Figure 8 shows simulated results for the common mode noise and noise reduction for the first embodiment of the power converter.

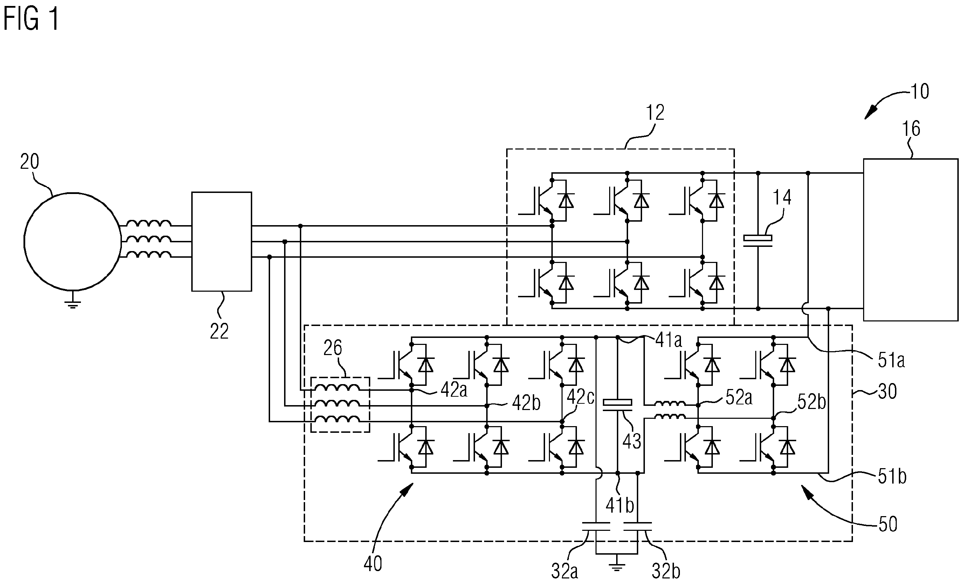

Fig 1 shows a power converter 10 according to a first embodiment of the invention. Power converter 10 comprises an active rectifier circuit 12 (also called AFE = active front end) which in turn comprises three parallel half-bridges, each having two power semiconductor switches connected in series. The three midpoints between the switches of each of the half-bridges form AC terminals of the active rectifier circuit 12 while the interconnected endpoints of each of the half-bridges form DC terminals of the active rectifier circuit 12.

The DC terminals of the active rectifier circuit 12 are connected to a DC link 14 having in this embodiment a single capacitor element. The DC terminals of the active rectifier circuit 12 and thus the DC link 14 are furthermore connected to a load 16. The load is shown as a simplified element in the figures but load 16 may be active or passive. For example, load 16 may comprise a three-phase inverter connecting to an electric motor, thus forming an industrial drive system.

The AC terminals of the active rectifier circuit 12 are connected to a three-phase supply voltage such as three-phase grid 20 across a passive EMI filter 22.

The power converter 10 further comprises an active filter circuit 30 which is connected on the AC side to grid 20 and on the DC side to DC link 14. The active filter circuit 30 comprises active filter inductors 26, an auxiliary active rectifier circuit 40 and an active DC/DC converter 50. The active filter inductors 26 are arranged in each of the AC lines between the auxiliary active rectifier circuit 40 and the grid 20.

The auxiliary rectifier circuit 40 is built similarly to the active rectifier circuit 12, i.e. it comprises three parallel half-bridges of two controllable power semiconductor switches each. In other embodiments it may be using a different topology, such as a three-level topology. The outer terminals of the half-bridges form DC terminals 41a, b of the auxiliary rectifier circuit 40 and the midpoints of the half-bridges form AC terminals 42a...c of the auxiliary rectifier circuit 40.

The active DC/DC converter 50 comprises two parallel half-bridges of two controllable power semiconductor switches each. DC/DC converter 50 has two outer DC terminals 51a, b formed by the connected outer terminals of the half-bridges and two inner DC terminals 52a, b formed by the midpoints of the two half-bridges.

In the first embodiment according to figure 1 the outer DC terminals 51a, b of the active DC/DC converter 50 are connected to DC link 14. The inner DC terminals 52a, b are connected across an inductor to the DC terminals 41a, b of the auxiliary rectifier circuit 40. Additionally, a capacitor 43 is connected between the DC terminals 41a, b of the auxiliary rectifier circuit 40 forming an auxiliary DC link. Finally, the DC terminals 41a, b of the auxiliary rectifier circuit 40 are connected to ground across CM (common mode) path capacitors 32a, b.

The power converter 10 is configured to operate the switches of the active rectifier circuit 12 with a frequency of between 2 and 4 kHz, i.e. with a reduced frequency compared to typical operating frequencies of such power converters. The switches of the active filter circuit 30 are operated at a higher frequency, e.g. 16 kHz. While the switches of the active rectifier circuit 12 are controlled to handle the load current, the switches of the active filter circuit 30 are controlled to only operate to reduce the noise that the switches of the active rectifier circuit 12 produce at its AC terminals, i.e. toward the grid 20.

Operation of the switches of the active filter circuit 30 may be based on an estimation of the generated DM and CM noise based on the control scheme (pulse width modulation) of the active rectifier circuit 12. In an alternative embodiment, operation of the switches of the active filter circuit 30 may be based on a measurement of the noise between the AC terminals of active rectifier circuit 12 and the grid 20.

The auxiliary filter circuit 40 is operated to generate a voltage at its AC terminals that equals the reverse of the DM noise that is present to compensate that part of the noise. The active DC/DC filter 50 is operated to generate a voltage at the DC terminals of auxiliary filter circuit 40 that is the reverse of the present CM noise. The terminals that form the "output" terminals of the DC/DC converter 50 vary across embodiments as will be seen from the following description of other embodiments.

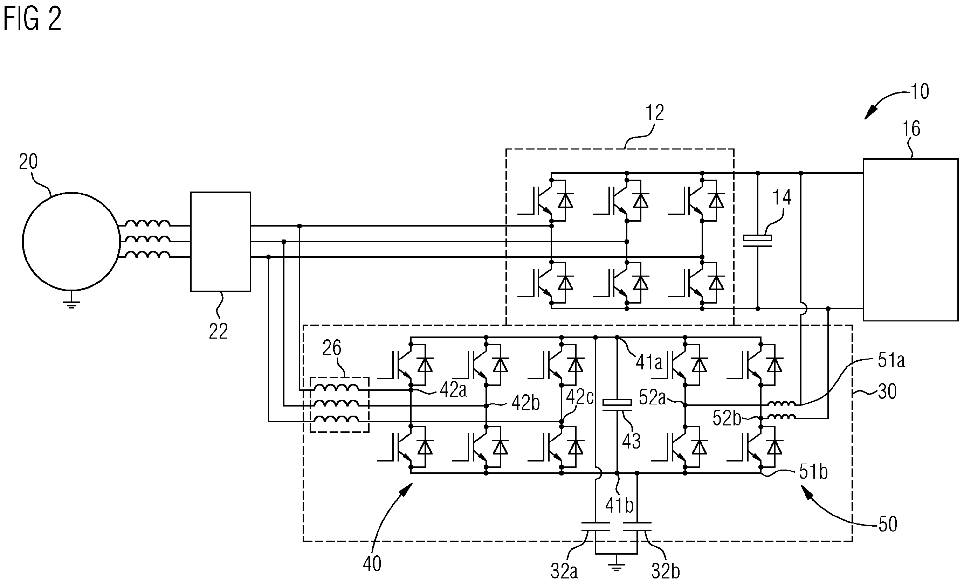

The embodiment shown in figure 2 is generally similar and comprises the same elements as the embodiment of figure 1. The connection of the elements is changed with respect to the configuration of the first embodiment. In the embodiment according to figure 2, instead of the inner terminals 52a, b the outer terminals 51a, b of the active DC/DC converter 50 are connected to the DC terminals 41a, b of the auxiliary acting rectifier 40. The inner DC terminals 52a, b are connected to the DC link 14 across inductances.

The operation of the power converter 10 and particularly the active filter circuit 30 follows the same principles as given for the first embodiment according to figure 1.

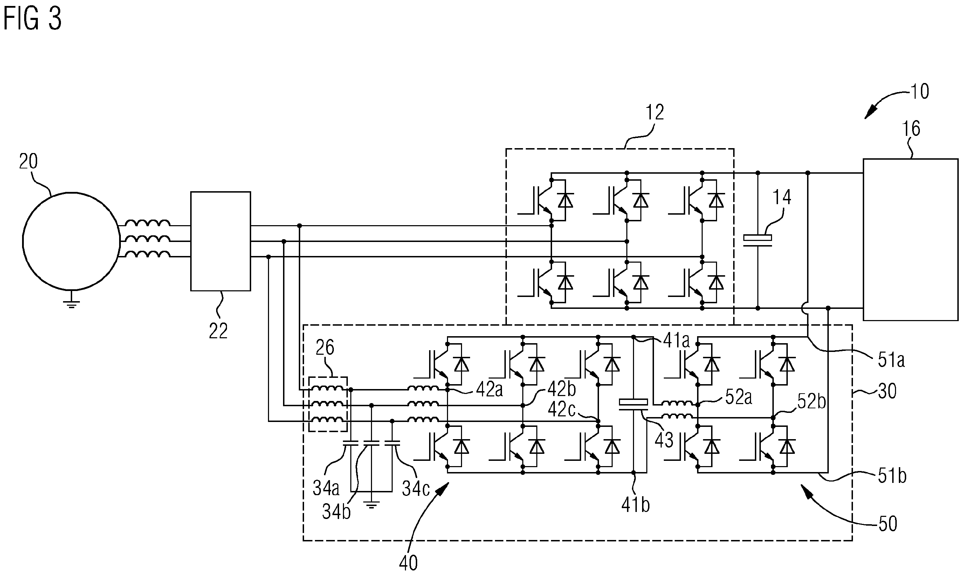

Figure 3 shows a third embodiment of the invention. This embodiment is similar in its configuration to the first embodiment according to figure 1. Contrary to the first embodiment, the third embodiment does not use two CM path capacitors 32a, b connected to the DC terminals 41a, b of the auxiliary active rectifier 40. Instead, three CM path capacitors 34a...c are used in this embodiment. These are connected to the AC lines at nodes between the AC terminals 42a...c of the auxiliary active rectifier 40 and the inductor 26. Further inductances 35a...c are arranged between the AC terminals 42a...c and those nodes.

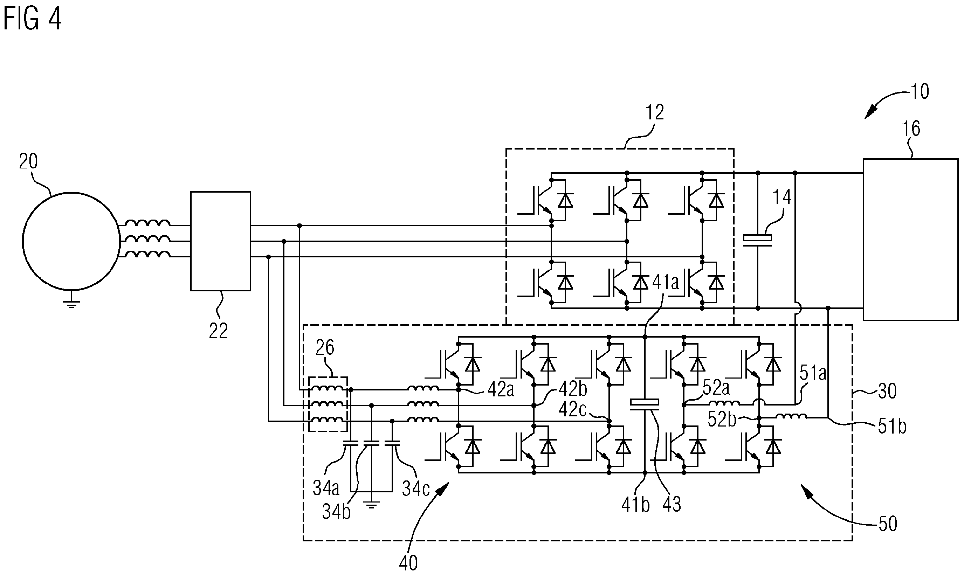

Figure 4 shows a fourth embodiment of the invention. This embodiment incorporates the changes of the second and third embodiment over the first embodiment. In the embodiment according to figure 4, the outer terminals 51a, b of the active DC/DC converter 50 are connected to the DC terminals 41a, b of the auxiliary acting rectifier 40. The inner DC terminals 52a, b are connected to the DC link 14 across inductances. Also, three CM path capacitors 34a...c are used. These are connected to the AC lines at nodes between the AC terminals 42a...c of the auxiliary active rectifier 40 and the inductor 26. Further inductances 35a...c are arranged between the AC terminals 42a...c and those nodes.

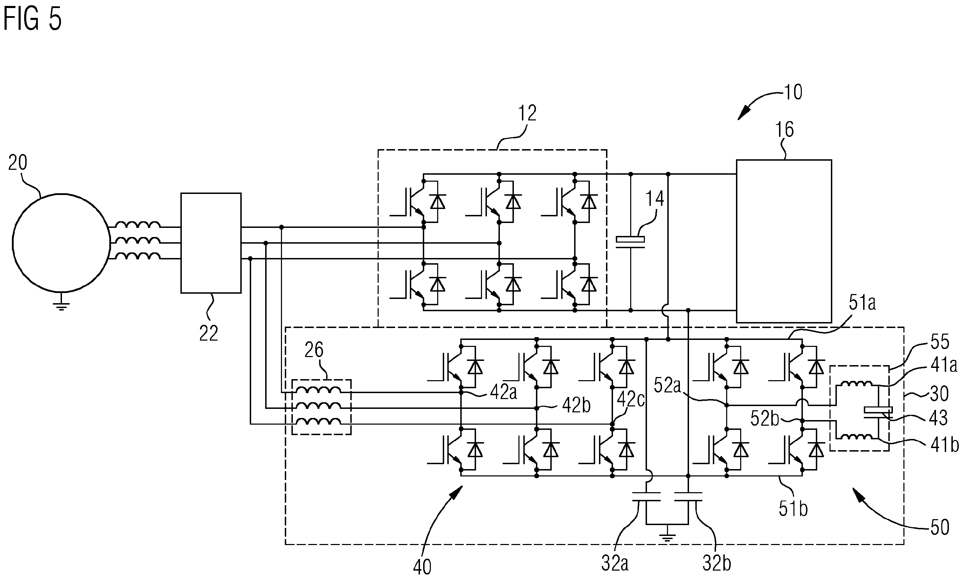

Figure 5 shows a fifth embodiment of the invention. The embodiment shown in figure 5 is generally similar to the second embodiment of figure 2, i.e. the outer terminals 51a, b of the active DC/DC converter 50 are connected to the DC terminals 41a, b of the auxiliary acting rectifier 40. In addition, the DC terminals 41a, b of the auxiliary rectifier circuit 40 are connected to ground across CM (common mode) path capacitors 32a, b.

Contrary to the second embodiment of figure 2, the DC terminals 41a, b of the auxiliary active rectifier 40 are connected to the DC link 14. The inner DC terminals 52a, b of the active DC/DC converter are connected across an LCL structure 55, i.e. a series connection of an inductor, capacitor and inductor.

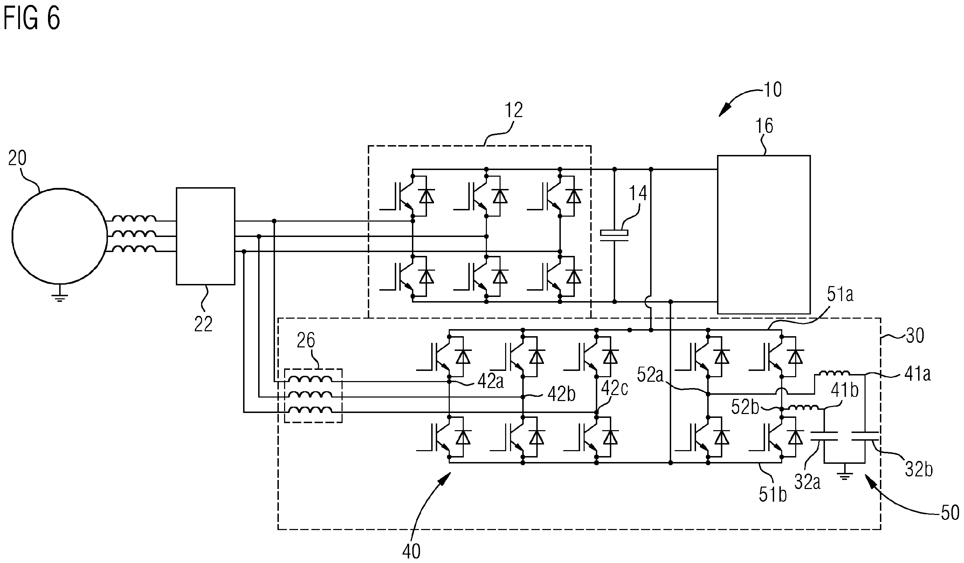

Figure 6 shows a sixth embodiment of the invention. The embodiment shown in figure 6 is generally similar to the fifth embodiment of figure 5, i.e. the outer terminals 51a, b of the active DC/DC converter 50 are connected to the DC terminals 41a, b of the auxiliary acting rectifier 40. In contrast to the fifth embodiment, the CM path capacitors 32a, b are now arranged to take the place of the capacitor of the LCL structure connected to the inner DC terminals 52a, b of the DC/DC converter. In other words, each of the inner DC terminals 52a, b is connected to ground across an inductance and capacitor series.

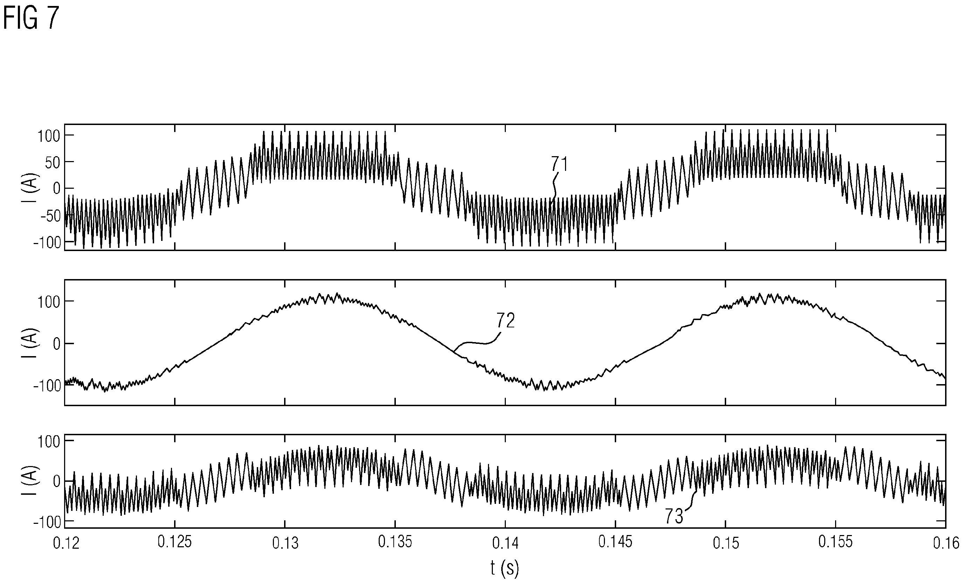

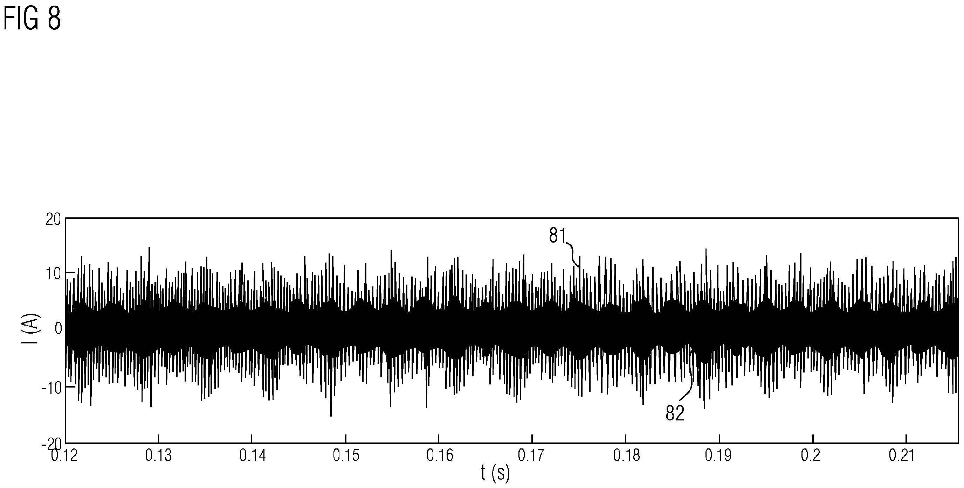

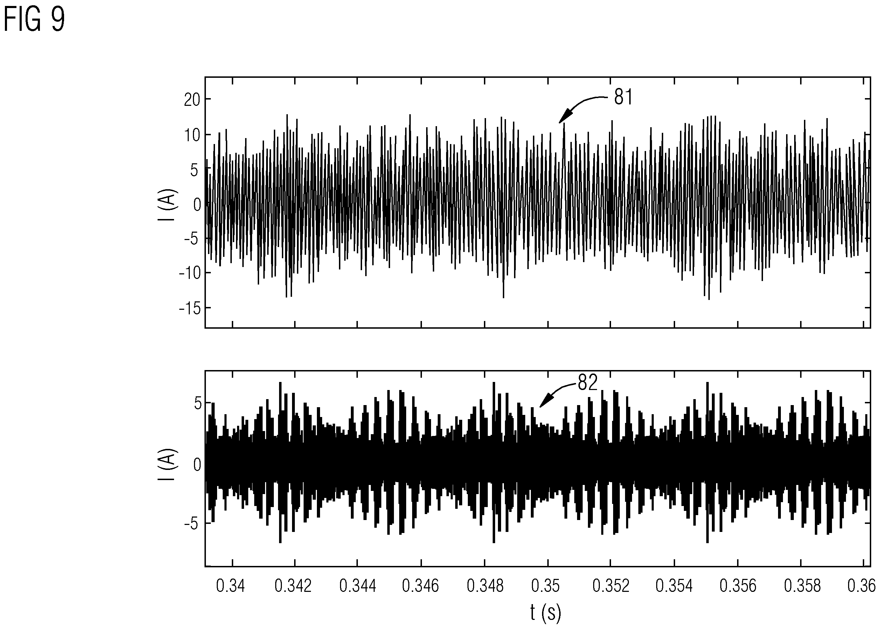

Figures 7 and 8 show simulated results for the first embodiment of the invention according to figure 1. In Fig.7 the differential mode noise and noise compensation at the grid is shown by looking at one phase current. In this simulation, the active rectifier 12 is operated at a comparatively low switching frequency, resulting in comparatively high noise output which is seen in the current trace 71.

The output of the differential mode active filter, i.e. the auxiliary active rectifier 40 produces compensating noise as seen in the current trace 73. The resulting current seen by the grid is shown as current trace 72. The differential mode noise is reduced substantially.

To achieve a similar result without the use of an active filter circuit 30 the active rectifier 12 would need to operate at a much higher switching frequency and would require an additional higher output inductance. The comparatively high switching frequency would increase the switching losses significantly as the active rectifier 12 is handling high power.

Figure 8 shows simulation results for the common mode noise current as the sum of the three-phase current. Trace 81 shows the common mode noise current at the output of the active rectifier 12. Trace 82 shows the common mode noise at the grid, i.e. including the effects of the active filter circuit 40.

### List of reference numbers

- 10: power converter
- 12: active rectifier
- 14: DC link
- 16: load
- 20: grid
- 22: passive filter circuit
- 26: active filter circuit inductors
- 30: active filter circuit
- 32a, b: CM path capacitors
- 34a...c: CM path capacitors
- 40: auxiliary active rectifier
- 41a, b: auxiliary DC terminals of the auxiliary active rectifier
- 42a...c: auxiliary AC terminals of the auxiliary active rectifier
- 43: auxiliary DC link capacitor
- 50: DC/DC converter
- 51a, b: outer DC terminals of the acting DC/DC converter
- 52a, b: inner DC terminals of the acting DC/DC converter
- 55: LCL structure
- 71: one phase current at the AC terminals of the active rectifier circuit
- 72: one phase current at the grid
- 73: one phase current at the AC terminals of the active filter circuit
- 81: current sum at the AC terminals of the active rectifier circuit
- 82: current sum at the grid

## Claims

1. A power converter (10) with
- a DC link (14) with at least one DC link capacitor,
- an active rectifier circuit (12) connected between AC terminals of the converter (10) and the DC link (14),
- an active filter circuit (30) connected between AC terminals of the converter (10) and the DC link (14),
wherein
- the active filter circuit (30) comprises an auxiliary active rectifier circuit (40) with auxiliary AC terminals (42a...c) and auxiliary DC terminals (41a, b) and an active filter inductor (26) in each line between the AC terminals of the converter (10) and the auxiliary AC terminals (42a..c),
- the active filter circuit (30) comprises a DC/DC-converter (50) having first and second auxiliary DC terminals, the first auxiliary DC terminals being connected to the auxiliary DC terminals (41a, b), wherein the DC/DC converter (50) is configured to operate as an active common mode noise filter,
- the active filter circuit (30) comprises a capacitive connection to a ground or neutral potential of the converter (10).

2. The power converter (10) of claim 1, wherein the DC/DC converter (50) comprises a parallel circuit comprising two half-bridges, each having two controllable semiconductor switches.

3. The power converter (10) of claim 2, wherein the first auxiliary DC terminals are each connected across an inductance to one of the midpoints (52a, b) of the half-bridges and the outer terminals (51a, b) of the half-bridges form the second auxiliary DC terminals.

4. The power converter (10) of claim 2, wherein the second auxiliary DC terminals are each connected across an inductance to one of the midpoints (52a, b) of the half-bridges and the outer terminals (51a, b) of the half-bridges form the first auxiliary DC terminals.

5. The power converter (10) of claim 4, wherein the midpoints (52a, b) of the half-bridges are interconnected across a LCL series connection (55) of an inductor, a capacitor and an inductor.

6. The power converter (10) of any of the preceding claims, wherein the second auxiliary DC terminals are connected to the DC link (14).

7. The power converter (10) of any of the preceding claims, wherein the capacitive connection comprises, for each of the second auxiliary DC terminals of the DC/DC converter, a capacitor (32a, b) arranged between the respective terminal and ground.

8. The power converter (10) of any of the preceding claims, wherein the capacitive connection comprises, for each of the first auxiliary DC terminals of the DC/DC converter, a capacitor (32a, b) arranged between the respective terminal and ground.

9. The power converter (10) of any of the preceding claims with a capacitor (43) connected between the auxiliary DC terminals forming an auxiliary DC link.

10. The power converter (10) of any of the preceding claims, wherein the capacitive connection comprises, for each of the AC lines, a capacitor (34a...c) arranged between the respective line and ground, connected to the line at a node between the auxiliary AC terminals (42a...c) and the active filter inductor (26), with a further inductor between the node and the auxiliary AC terminals (42a...c).

11. The power converter (10) of any of the preceding claims, wherein the semiconductor switches (44a...f) of the active rectifier circuit (12) are selected to have a current rating that at least matches the nominal maximum current of the converter (10).

12. The power converter (10) of any of the preceding claims, wherein the semiconductor switches of the active filter circuit (30) are selected to have a current rating lower than the semiconductor switches (44a...f) of the active rectifier circuit (12).

13. The power converter (10) of any of the preceding claims, comprising an inverter circuit connected between the DC link (14) and load terminals.

14. The power converter (10) of any of the preceding claims, wherein the active rectifier circuit (12) is configured to operate at a switching frequency of between 1 and 10 kHz, particularly between 2 and 4 kHz.

15. The power converter (10) of any of the preceding claims, wherein the auxiliary active rectifier circuit (40) is configured to operate at a switching frequency of above 10 kHz, particularly above 50 kHz.
